# EUROPEAN PATENT SPECIFICATION

(11) **EP 3 975 525 B1**
(45) Date of publication and mention of the grant of the patent: **25.10.2023**
(21) Application number: 20827534.7
(22) Date of filing: 16.06.2020
(51) Int. Cl.: H04M 1/02, H04N 23/57

(54) **LASER PROJECTION MODULE, DEPTH CAMERA AND ELECTRONIC DEVICE**
LASERPROJEKTIONSMODUL, TIEFENKAMERA UND ELEKTRONISCHE VORRICHTUNG
MODULE DE PROJECTION LASER, CAMÉRA DE PROFONDEUR ET DISPOSITIF ÉLECTRONIQUE

(30) Priority: 21.06.2019 CN 201920957166 U
(43) Date of publication of application: 30.03.2022
(73) Proprietor: GUANGDONG OPPO MOBILE TELECOMMUNICATIONS CORP., LTD., Dongguan, Guangdong 523860 (CN)
(72) Inventor: LIU, Fu, Dongguan, Guangdong 523860 (CN)
(74) Representative: Manitz Finsterwald Patent- und Rechtsanwaltspartnerschaft mbB
(86) International application number: PCT/CN2020/096408
(87) International publication number: WO 2020/253686

(56) References cited:
- CN-A- 107 343 062
- CN-A- 107 483 663
- CN-A- 108 344 374
- CN-A- 108 388 063
- CN-A- 108 513 055
- CN-A- 109 067 951
- CN-A- 109 167 901
- CN-U- 208 739 213
- CN-U- 210 112 060
- US-A1- 2011 117 958

## Description

### FIELD

The present application relates to the field of consumer electronics technologies, and more particularly to a laser projection unit, a depth camera and an electronic device.

### BACKGROUND

A depth camera can be set on electronic devices such as mobile phones to obtain a depth of a target object. The specific implementation is as follows: the depth camera is controlled to emit laser to the target object, then the depth camera receives the laser reflected by the target object, and a depth image of the target object is obtained by comparing differences between a received laser pattern and a reference pattern.

CN 108 344 374 A discloses a laser projection module group, a depth camera and an electronic device. The laser projection module group includes a substrate component, a lens cone, a light source, a collimating element, a diffractive optical element and a protective sleeve. The lens cone is arranged on the substrate component to form an accommodating cavity with the substrate component together. The lens cone includes a lens cone side wall on which a side wall groove is formed. The light source is arranged on the substrate component and used for emitting laser to the accommodating cavity. The collimating element is accommodated in the accommodating cavity. The diffractive optical element is accommodated in the accommodating cavity. The light source, the collimating element and the diffractive optical element are arranged on the light path of the light source in turn. The protective sleeve includes a protective top wall and a protective side wall which extends from the protective top wall. The protective top wall is provided with a light through hole which is corresponding to the diffractive optical element. The protective side wall stretches into the side wall groove to be combinedwith the lens cone side wall. The protective sleeve can prevent the diffractive optical element from moving along the light emergent direction of the laser projection module group so that the diffractive optical element is enabled not to fall off along the light emergent direction of the laser projection module group.

CN 108 388 063 A discloses a laser projection module, a depth camera and an electronic device. The laser projection module includes a laser emitter, a collimation component, a diffractive optical element, a electrochromic device and a processor. The electrochromic device is positioned in a light emitting optical path of the laser emitter. The processor is connected with the electrochromic device, and controls the electrochromic device to change color so as to block laser emission when the collimation component and/or diffractive optical element are/is fractured. According to the laser projection module, depth camera and electronic device, the electrochromic device is arranged in the laser projection module, and when fracture any of the collimation component and the optical element is detected, the processor changes a voltage acted on the electrochromic device to reduce the transmittance of the electrochromic device; and thus, a user is prevented from damage of too large laser energy on the eyes due to fracture of the collimation component and the optical element, and the user can use the laser projection module more safely.

### SUMMARY

Embodiments of the present application provide a laser projection unit, a depth camera and an electronic device.

The invention is set out in the appended set of claims.

The laser projection unit according to embodiments of the present application includes a housing and a diffraction element. The housing includes a first sub-housing having a top face and a second sub-housing having a side face, the second sub-housing is coupled to the top face, and the side face and the top face cooperatively form a stepped face and define a first notch. The diffraction element is mounted on the second sub-housing.

The depth camera according to embodiments of the present application includes an imaging unit and a laser projection unit according to the above embodiments. The laser projection unit is used to project a laser outwards. The imaging unit is used to receive a reflected laser, and includes a lens base, a lens barrel and a lens, the lens barrel is coupled to the lens base, and the lens is mounted in the lens barrel.

The electronic device according to an embodiment of the present application includes a casing, a display screen, and a laser projection unit according to the above embodiments. The laser projection unit is mounted on the casing. The display screen is mounted on the casing, and at least partially located in the first notch.

The electronic device according to another embodiment of the present application includes a casing, a display screen and a depth camera according to the above embodiment. The depth camera is mounted on the casing. The display screen is mounted on the casing, and at least partially located in the first notch and the second notch.

The housing of the laser projection unit, the depth camera and the electronic device of the present application includes a first sub-housing and a second sub-housing, the second sub-housing is coupled to the first sub-housing, and the side face of the second sub-housing and the top face of the first sub-housing cooperatively form a stepped face and define a first notch. The first notch can be used to mount the display screen of the electronic device (such as a mobile phone). The laser projection unit occupies a small area of a front panel of the electronic device. The screen-to-body ratio is improved, and it is conducive to realizing the full screen.

Additional aspects and advantages of the embodiments of the present application will be given in part in the following description, become apparent in part from the following description, or be learned from the practice of the present application.

### BRIEF DESCRIPTION OF THE DRAWINGS

FIG. 1 is a schematic assembly view of an electronic device according to an embodiment of the present application.
FIGS. 2a and 2b are schematic plan views of a depth camera and a display screen according to an embodiment of the present application.
FIG. 3 is a schematic perspective assembly view of a laser projection unit according to an embodiment of the present application.
FIG. 4 is an exploded schematic perspective view of a laser projection unit according to an embodiment of the present application.
FIG. 5 is a schematic sectional view of the laser projection unit taken along line V-V in FIG. 3.
FIG. 6 is a schematic sectional view of the laser projection unit taken along line VI-VI in FIG. 3.
FIG. 7 is a partial sectional view of assembled display screen, cover plate and laser projection unit according to an embodiment of the present application.
FIG. 8 is a schematic plan view of a diffraction element of a laser projection unit according to an embodiment of the present application.
FIG. 9 is a schematic sectional view of another embodiment of the laser projection unit in FIG. 5.
FIG. 10 is a schematic perspective assembly view of an imaging unit according to an embodiment of the present application.
FIG. 11 is a schematic sectional view of the imaging unit taken along line XI-XI in FIG. 9. FIG. 12 is a schematic sectional view of a fill lamp according to an embodiment of the present application.
FIG. 13 is a schematic assembly view of a laser projection unit, a display screen and a cover plate according to an embodiment of the present application.

### DETAILED DESCRIPTION

Embodiments of the present disclosure are further described below with reference to the accompanying drawings. The same or similar elements or the elements having same or similar functions are denoted by the same or similar reference numerals throughout the accompanying drawings.

In addition, the following embodiments of the present disclosure described with reference to the accompanying drawings are exemplary and are only intended to explain the embodiments of the present disclosure, rather than limit the present disclosure.

In the present disclosure, unless otherwise explicitly specified and defined, a structure in which a first feature is "on" or "below" a second feature may include an embodiment in which the first feature is in direct contact with the second feature, and may further include an embodiment in which the first feature and the second feature are not in direct contact with each other, but are contacted via an additional feature formed therebetween. Furthermore, a first feature "on," "above," or "on top of" a second feature may include an embodiment in which the first feature is right or obliquely "on," "above," or "on top of" the second feature, or just means that the first feature is at a height higher than that of the second feature; while a first feature "below," "under," or "on bottom of" a second feature may include an embodiment in which the first feature is right or obliquely "below," "under," or "on bottom of" the second feature, or just means that the first feature is at a height lower than that of the second feature.

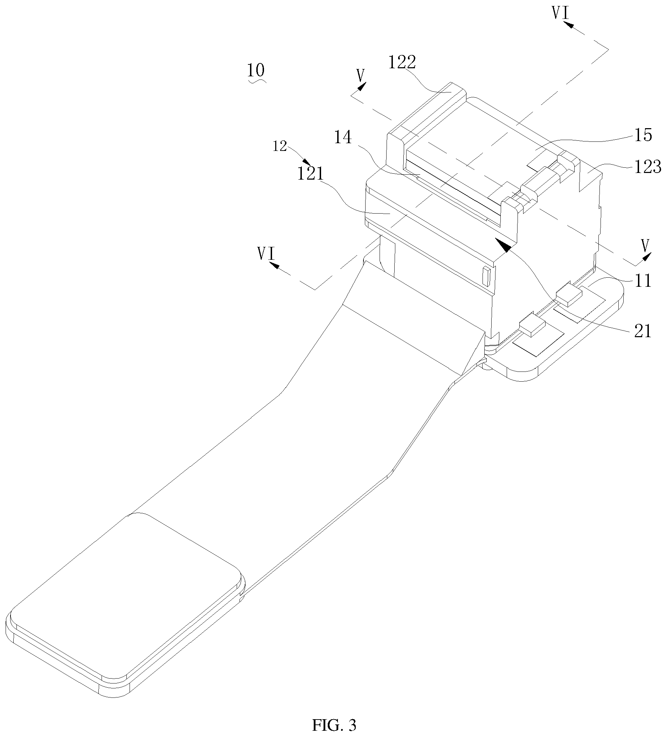

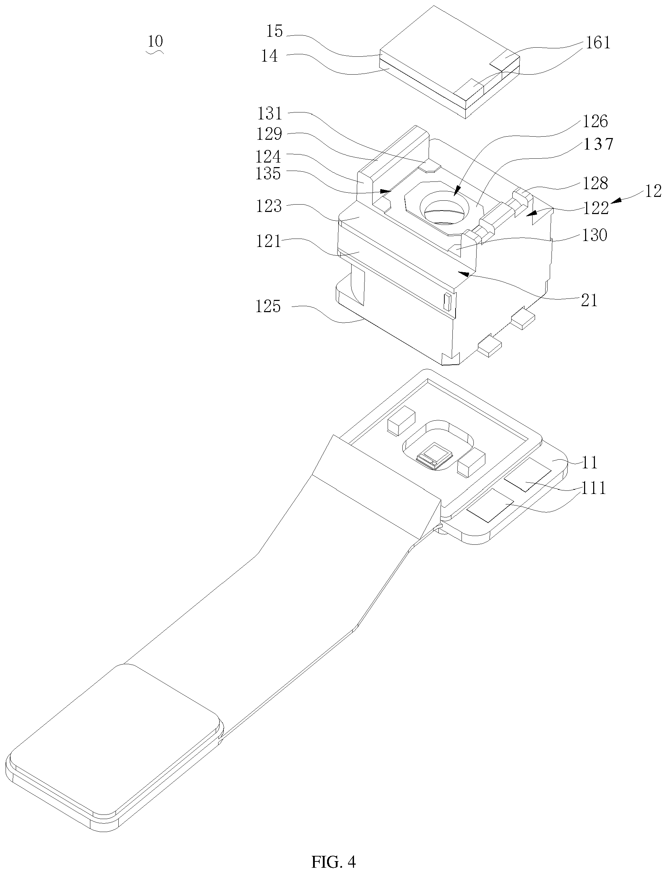

As illustrated in FIGS. 3 and 4, a laser projection unit 10 according to the present invention includes a housing 12 and a diffraction element 14. The housing 12 includes a first sub-housing 121 and a second sub-housing 122. The first sub-housing 121 includes a top face 123. The second sub-housing 122 is coupled to the top face 123. The second sub-housing 122 includes a side face 124. The side face 124 and the top face 123 cooperatively form a stepped face and define a first notch 21. The first notch 21 can be configured to mount a display screen 300. The diffraction element 14 is mounted on the second sub-housing 122.

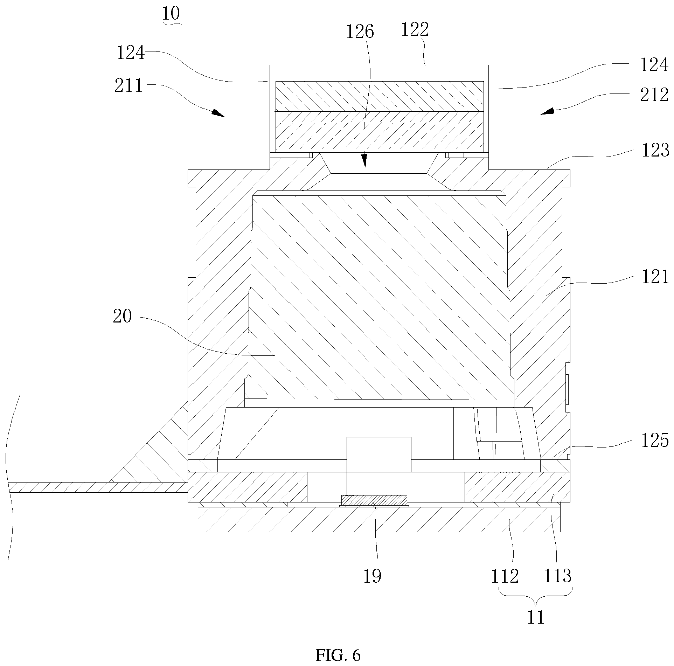

As illustrated in FIG. 6, in some embodiments, the first notch 21 includes a first sub-notch 211 and a second sub-notch 212. The first sub-notch 211 and the second sub-notch 212 are located in two sides of the second sub-housing 122 opposite each other, correspondingly.

As illustrated in FIGS. 3 to 6, in some embodiments, and according to the present invention, the second sub-housing 122 includes a first side wall 128 and a second side wall 129 arranged opposite each other. A mounting space 135 is defined between the first side wall 128 and the second side wall 129. The diffraction element 14 is arranged in the mounting space 135 and exposed from the first notch 21.

As illustrated in FIG. 3, in some embodiments, and according to the present invention, the laser projection unit 10 further includes a cover 15, the cover 15 is attached to the diffraction element 14, and the cover 15 and the first sub-housing 121 are located at two sides of the diffraction element 14 opposite each other.

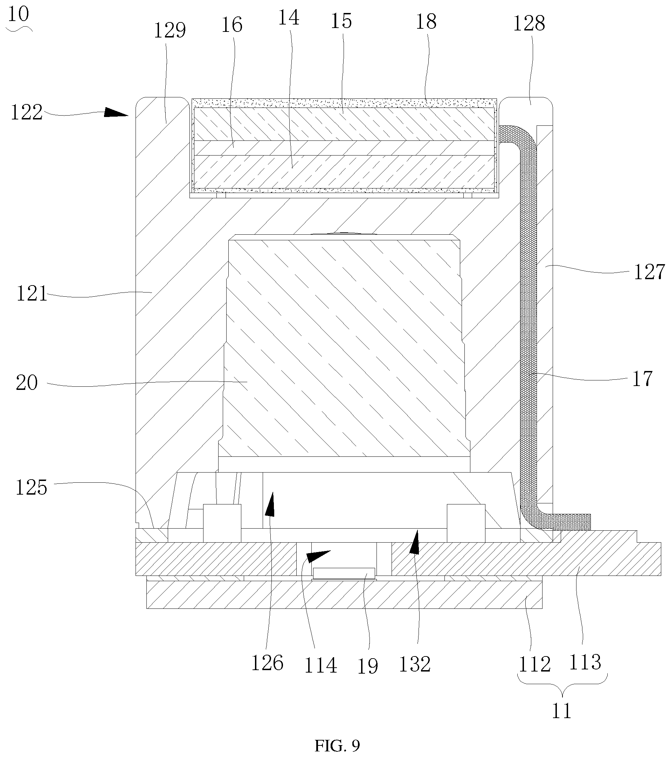

As illustrated in FIG. 9, in some embodiments, the laser projection unit 10 further includes a sealant 18, and the sealant 18 wraps the diffraction element 14 and the cover 15.

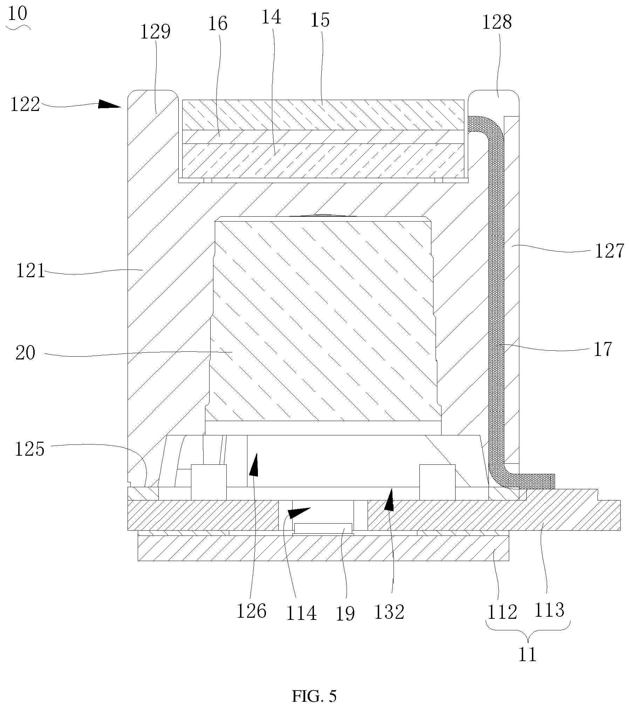

As illustrated in FIGS. 4 and 5, in some embodiments, and according to the present invention, the laser projection unit 10 includes a substrate 11, a circuit layer 16 and a coupling member 17. The first sub-housing 121 further includes a bottom face 125 opposite the top face 123, and the bottom face 125 is carried on the substrate 11. The circuit layer 16 is arranged on a surface of the diffraction element 14 attached to the cover 15, and the coupling member 17 electrically couples the substrate 11 and the circuit layer 16.

As illustrated in FIG. 3, in some embodiments, the substrate 11 includes a flexible printed circuit board, a rigid printed circuit board, or a rigid-flex printed circuit board.

As illustrated in FIG. 4, in some embodiments, a mounting surface 1222 is formed on a side of the second sub-housing 122 opposite the first notch 21. A shape of the mounting face cut by a plane perpendicular to the side face 124 of the second sub-housing 122 is in an arc shape.

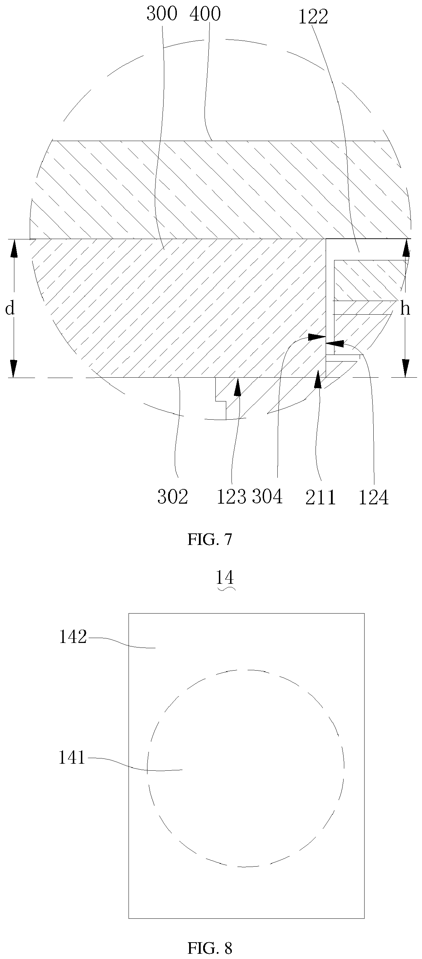

As illustrated in FIG. 7, in some embodiments, a height h of the second sub-housing 122 extending from the top face 123 is equal to a thickness d of the display screen 300.

As illustrated in FIG. 5, in some embodiments, the laser projection unit 10 further includes a laser emitter 19, and the laser emitter 19 is arranged on the substrate 11, and configured to emit a laser of a predetermined wave band.

As illustrated in FIG. 5, in some embodiments, the laser emitter 19 includes a vertical-cavity surface-emitting laser.

As illustrated in FIG. 5, in some embodiments, the laser projection unit 10 further includes a collimating element 20. The first sub-housing 121 defines a receiving cavity 126, and the collimating element 20 is arranged on the first sub-housing 121 and located in the receiving cavity 126.

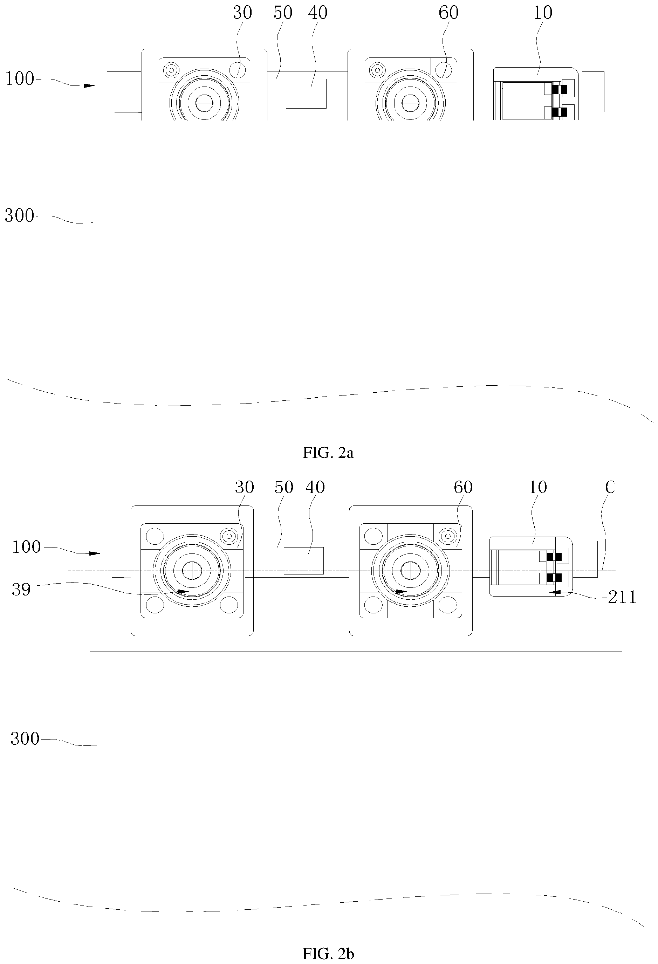

As illustrated in FIGS. 2a, 2b, 10 and 11, a depth camera 100 according to embodiments of the present application includes a laser projection unit 10 and an imaging unit 30, the laser projection unit 10 is configured to project a laser outwards and the imaging unit 30 is configured to receive a reflected laser. The imaging unit 30 includes a lens base 32, a lens barrel 35 and a lens 36. The lens barrel 35 is coupled to the lens base 32, and the lens 36 is mounted in the lens barrel 35.

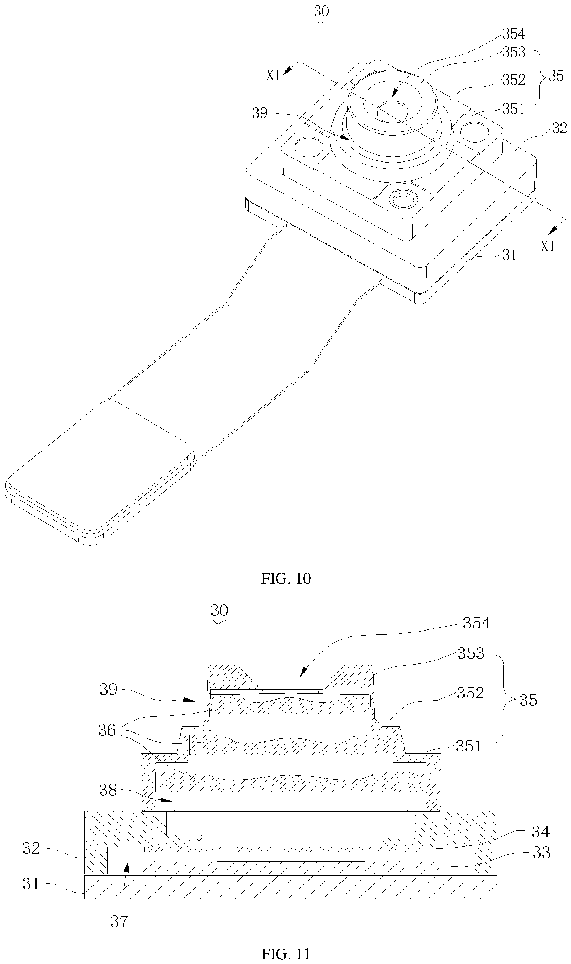

As illustrated in FIGS. 10 and 11, in some embodiments, the lens barrel 35 includes a first sub-lens barrel 351, a second sub-lens barrel 352 and a third sub-lens barrel 353 coupled sequentially. The first sub-lens barrel 351 is coupled to the lens base 32. Sizes of the first sub-lens barrel 351, the second sub-lens barrel 352 and the third sub-lens barrel 353 gradually decrease. The third sub-lens barrel 353 and the second sub-lens barrel 352 are arranged in a step shape. The second sub-lens barrel 352 and the first sub-lens barrel 351 are arranged in a step shape. A second notch 39 is defined between the third sub-lens barrel 353 and the second sub-lens barrel 352.

As illustrated in FIGS. 2a and 2b, in some embodiments, at least part of the first notch 21 and at least part of the second notch 39 are located on a same side of a coupling line C between the laser projection unit 10 and the imaging unit 30.

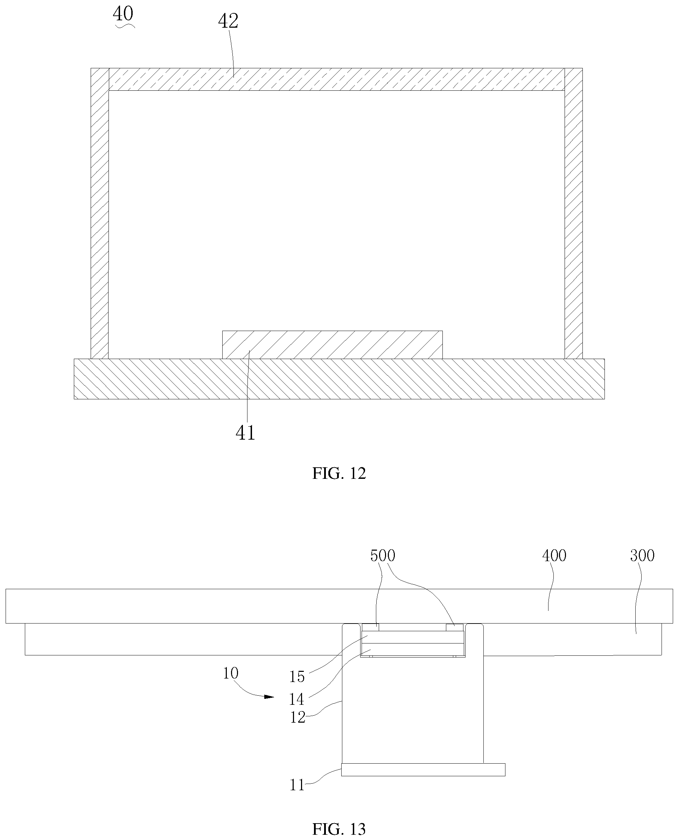

As illustrated in FIGS. 2a, 2b and 12, in some embodiments, the depth camera 100 further includes a fill lamp 40. The fill lamp 40 includes a vertical-cavity surface-emitting laser 41 and a diffuser 42. The vertical-cavity surface-emitting laser 41 is configured to emit a laser passing through the diffuser 42.

As illustrated in FIGS. 2a and 2b, in some embodiments, the depth camera 100 further includes a bracket 50. The laser projection unit 10 and the imaging unit 30 are mounted on the bracket 50.

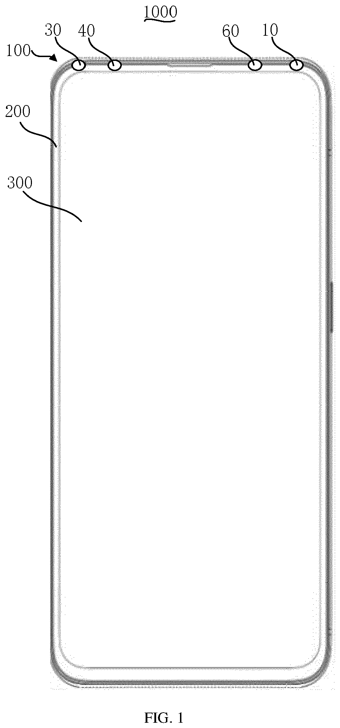

As illustrated in FIGS. 1, 2a and 2b, the electronic device 1000 according to embodiments of the present application includes the depth camera 100, a casing 200 and the display screen 300. The depth camera 100 is mounted on the casing 200. The display screen 300 is at least partially located in the first notch 21 and the second notch 39.

As illustrated in FIG. 13, the electronic device 1000 further includes a cover plate 400 and an elastic member 500. The cover plate 400 is mounted on the casing 200 and covers the depth camera 100 and the display screen 300. The elastic member 500 is arranged between the diffraction element 14 and the cover plate 400.

As illustrated in FIGS. 1, 2a and 2b, the electronic device 1000 according to embodiments of the present application includes the depth camera 100, the casing 200 and the display screen 300. The depth camera 100 is mounted on the casing 200. The display screen 300 is mounted on the casing 200.

The depth camera 100 includes a laser projection unit 10 and an imaging unit 30. The laser projection unit 10 is configured to project a laser outwards, such as an infrared laser, and the laser is reflected after reaching an object in the scene. The imaging unit 30 is configured to receive the reflected laser.

At present, mobile phones using a structured light scheme on the market are limited by a volume of a structured light unit and the immaturity of the current under-screen structured light scheme. Thus, the structured light unit occupies a large area of a front panel of a mobile phone, resulting in a relatively low screen-to-body ratio, and it is not conducive to realizing a full screen.

As illustrated in FIGS. 3 and 4, the laser projection unit 10 includes the housing 12 and the diffraction element 14. The housing 12 includes the first sub-housing 121 and the second sub-housing 122. The first sub-housing 121 includes the top face 123. The second sub-housing 122 is coupled to the top face 123. The second sub-housing 122 includes the side face 124. The side face 124 and the top face 123 cooperatively form the stepped face and define the first notch 21. The first notch 21 can be configured to mount the display screen 300. The diffraction element 14 is mounted on the second sub-housing 122.

The housing 12 of the laser projection unit 10, the depth camera 100 and the electronic device 1000 of the present application includes a first sub-housing 121 and a second sub-housing 122. The second sub-housing 122 is coupled to the first sub-housing 121. The side face 124 of the second sub-housing 122 and the top face 123 of the first sub-housing 121 cooperatively form the stepped face and define the first notch 21. The first notch 21 can be configured to mount the display screen 300 of the electronic device 1000 (such as a mobile phone). The laser projection unit 10 occupies a small area of the front panel of the electronic device 1000. The screen-to-body ratio is improved, and it is conducive to realizing the full screen.

The laser projection unit 10, the depth camera 100 and the electronic device 1000 are described in detail below.

As illustrated in FIG. 1, the electronic device 1000 of the present application includes the depth camera 100, the casing 200 and the display screen 300. The depth camera 100 and the display screen 300 are both mounted on the casing 200. In other embodiments, the electronic device 1000 may include the laser projection unit 10, the casing 200, and the display screen 300. The display screen 300 is mounted on the casing 200, and is at least partially located in the first notch 21 (illustrated in FIGS. 2a and 2b).

The electronic device 1000 may be terminal equipment such as a mobile phone, a tablet, a tablet, a notebook, a desktop computer, an intelligent wearable device (such as a smart watch). It is illustrated below by an example in which the electronic device 1000 is a mobile phone. When the electronic device 1000 is other terminal equipment, the principle is basically the same, and will not be repeated here.

As illustrated in FIGS. 2a and 2b, the depth camera 100 includes the laser projection unit 10, the imaging unit 30, the fill lamp 40 and the bracket 50. The laser projection unit 10 is configured to project a laser outwards. The imaging unit 30 is configured to receive the reflected laser. In one example, the depth camera 100 can obtain depth information through a Time of flight (TOF) ranging method, and in another example, the depth camera 100 can obtain the depth information through a structured light ranging principle. It is illustrated in the specification of the present application by an example in which the depth camera 100 obtains the depth information through the structured light ranging principle.

As illustrated in FIGS. 3 to 6, the laser projection unit 10 includes a substrate 11, a housing 12, a diffraction element 14, a cover 15, a circuit layer 16 and a coupling member 17.

The substrate 11 includes a heat dissipation plate 112 and a circuit board 113 arranged on the heat dissipation plate 112. The circuit board 113 defines a through hole 114. The heat dissipation plate 112 may be made of materials with a good thermal conductivity, such as metals, ceramics etc. The circuit board 113 may be a flexible printed circuit (FPC) board, a rigid printed circuit board, or a rigid-flex printed circuit board. In this embodiment, the substrate 11 is a flexible printed circuit board. The first sub-housing 121 includes a top face 123 and a bottom face 125 opposite each other. The bottom face 125 of the first sub-housing 121 is carried on the substrate 11. A combination mode of the first sub-housing 121 and the substrate 11 may be gluing, screwing, snapping, welding, etc. The bottom face 125 of the first sub-housing 121 defines a first opening 132, and the first sub-housing 121 defines a receiving cavity 126.

After the first sub-housing 121 is mounted on the substrate 11, the substrate 11 covers the first opening 132 to isolate the receiving cavity 126 from the outside. The laser projection unit 10 further includes a laser emitter 19 and a collimating element 20. The laser emitter 19 is configured to emit a laser of a predetermined wave band. For example, the laser of the predetermined wave band can be infrared light with a predetermined wavelength of 940 nm or infrared light of other wavelengths, and is not limited here. The laser emitter 19 may be a vertical-cavity surface-emitting laser (VCSEL). The vertical-cavity surface-emitting laser is used as the laser emitter 19, so that laser patterns emitted by the projection unit 10 are highly irrelevant, which is conducive to obtaining a high-precision depth image. The laser emitter 19 is arranged on the substrate 11. Specifically, the laser emitter 19 is arranged on the heat dissipation plate 112 of the substrate 11 and located in the through hole 114. The heat dissipation plate 112 can conduct the heat generated by the laser emitter 19 to realize the rapid heat dissipation. The laser emitter 19 is electrically coupled to the circuit board 113 of the substrate 11.

The collimating element 20 is arranged on the first sub-housing 121 and is located in the receiving cavity 126. The collimating element 20 is used for collimating the laser. The collimating element 20 is a lens, which can be a separate lens, and the lens is a convex lens or a concave lens. Or, the collimating element 20 is a plurality of lenses, and the plurality of lenses may be all convex lenses or all concave lenses, or partially convex lenses and partially concave lenses.

The first sub-housing 121 further includes a side wall 127 coupling the top face 123 and the bottom face 125. The side wall 127 of the first sub-housing 121 is engaged with the collimating element 20 to fix the collimating element 20. The engagement mode of the side wall 127 of the first sub-housing 121 and the collimating element 20 may be gluing, screwing, snapping, etc.

The second sub-housing 122 is arranged on the top face 123 of the first sub-housing 121. The second sub-housing 122 is formed by extending from the top face 123 in a direction running away from the top face 123. The second sub-housing 122 includes a side face 124, a first side wall 128 and a second side wall 129 opposite each other, a first mounting platform 130, and a second mounting platform 131.

The side face 124 is located between the first side wall 128 and the second side wall 129. A surface of the first side wall 128 opposite the second side wall 129 and a surface of the first side wall 128 opposite the second side wall 129 are coupled by the side face 124 located at the first side wall 128. A surface of the second side wall 129 opposite the first side wall 128 and a surface of the second side wall 129 opposite the first side wall 128 are coupled by the side face 124 located at the second side wall 129. The side face 124 and the top face 123 of the first sub-housing 121 cooperatively form the stepped face and define a first notch 21.

As illustrated in FIG. 7, the first notch 21 can be configured to mount the display screen 300 of the electronic device 1000. In this embodiment, the display screen 300 partially extends into the first notch 21, a lower surface 302 of the display screen 300 contacts the top face 123 of the first sub-housing 121, and a side surface 304 of the display screen 300 contacts the side face 124 of the second sub-housing 122. The height h of the second sub-housing 122 extending from the top face 123 is equal to the thickness d of the display screen 300. In this way, the second sub-housing 122 is neither too high to lift the cover plate 400, resulting in insufficient attachment between the cover plate 400 and the display screen 300, nor too low to affect an exit field angle of the laser emission unit 10.

The mounting space 135 is defined between the first side wall 128 and the second side wall 129.

The first mounting platform 130 and the second mounting platform 131 are each arranged on the top face 123 of the first sub-housing 121. The first mounting platform 130 is located in the mounting space 135 and coupled to the surface of the first side wall 128 opposite the second side wall 129. The second mounting platform 131 is located in the mounting space 135 and coupled to the surface of the second side wall 129 opposite the first side wall 128. In this embodiment, two first mounting platforms 130 are provided, and the two first mounting platforms 130 are spaced apart from each other; two second mounting platforms 131 are provided, and the two second mounting platforms 131 are spaced apart from each other.

The first notch 21 is located outside the mounting space 135. The first notch 21 includes a first sub-notch 211 and a second sub-notch 212. The first sub-notch 211 and the second sub-notch 212 are located on two sides of the second sub-housing 122 correspondingly, specifically on two sides of the mounting space 135. In other embodiments, the mounting face (not illustrated in figures) is formed on a side of the second sub-housing 122 opposite the first notch 21. That is, the mounting face and the first notch 21 are located on two sides of the second sub-housing 122 opposite each other correspondingly. The shape of the mounting face cut by the plane perpendicular to the side face 124 of the second sub-housing 122 is in an arc shape. When assembling the electronic device 1000, the arc-shaped mounting face is closely fitted with an arc-shaped inner wall of a middle frame of the electronic device 1000, so that the second sub-housing 122 is mounted more firmly.

The diffractive element 14 may be a diffractive optical element. The diffraction element 14 is mounted on the second sub-housing 122 and arranged in the mounting space 135. The side face of the diffraction element 14 is exposed from the first notch 21. The top face 123 of the first sub-housing 121 defines a second opening 126. The first sub-housing 121 further includes a protuberance 137 arranged on the top face 123, and the protuberance 137 surrounds the second opening 126. The diffraction element 14 can be arranged on the first mounting platform 130, the second mounting platform 131 and the protuberance 137 by glue dispensing, and cover the second opening 126. During glue dispensing, the glue is applied on the first mounting platform 130 and the second mounting platform 131. Even if the glue overflows, due to the presence of the protuberance 137, the glue will not run over the protuberance 137 and flow into the receiving cavity 126 from the second opening 126, affecting the collimation effect of the collimating element 20. It can be understood that the coupling mode between the diffraction element 14 and the first mounting platform 130 and the second mounting platform 131 can also be snapping, screwing, welding and other coupling modes.

As illustrated in FIG. 8, the diffraction element 14 includes a diffraction region 141 and a mounting region 142 surrounding the diffraction region 141. The mounting area 142 at an end of the diffraction element 14 is coupled to the first mounting platform 130, and the mounting area 142 the other end of the diffraction element is coupled to the second mounting platform 131.

The cover 15 is arranged on the diffraction element 14 and attached to the diffraction element 14. The cover 15 is located in the mounting space 135, and the cover 15 and the first sub-housing 121 are located at two sides of the diffraction element 14 opposite each other, correspondingly.

After being collimated by the collimating element 20, the laser emitted by the laser emitter 19 is emitted from the second opening 126, and then successively passes through the diffraction region 141 of the diffraction element 14 and the cover 15. The diffraction region 141 of the diffraction element 14 can copy the laser pattern, copying one laser beam into multiple laser beams. Finally the laser shoots to a target object for generating a depth image.

The cover 15 may be a plastic cover or a glass cover with good light transmittance. The cover 15 can protect the diffractive element 14 to prevent wear, fracture and other problems of the diffractive element 14 caused by a direct contact between other elements in the electronic device 1000 and the diffractive element 14.

The circuit layer 16 is arranged on the surface of the diffraction element 14 attached to the cover 15. The circuit layer 16 may cover the diffraction region 141 and the mounting region 142. After the diffraction area 141 or the mounting area 142 is damaged and broken, the circuit layer 16 at a position corresponding to the damaged and broken diffraction area 141 or the mounting area 142 will fracture, resulting in problems such as an open circuit and an increased resistance of the circuit layer 16. When a processor of the electronic device 1000 detects that the circuit layer 16 is an open circuit or the resistance of the circuit layer 16 is increased, it can be determined that the circuit layer 16 is damaged and broken. Thus, it is quickly determined whether the diffraction element 14 is damaged. In other embodiments, the circuit layer 16 may be arranged only in the diffraction region 141 to detect whether the diffraction region 141 is damaged or broken.

The coupling member 17 is arranged in the first sub-housing 121 and the second sub-housing 122. The coupling member 17 may be made of a conductive material, for example, the coupling member 17 is a metal coupling member (such as a copper sheet). The circuit layer 16 includes a first pad 161, and the substrate 11 includes a second pad 111. The coupling member 17 penetrates through the first sub-housing 121 and the second sub-housing 122 to couple the first pad 161 and the second pad 111. Specifically, the coupling member 17 is located in the side wall 127 of the first sub-housing 121 and the first side wall 128 (or the second side wall 129) of the second sub-housing 122, and basically does not occupy the space of the electronic device 1000. The coupling member 17 is coupled to the first pad 161 through low-temperature silver paste, and the coupling member 17 is coupled to the second pad 111 through tin welding.

An end of the coupling member 17 is coupled to the circuit layer 16 through the first pad 161, and the other end of the coupling member 17 is coupled to the substrate 11 through the second pad 111 to realize an electrical coupling between the circuit layer 16 and the substrate 11, so that after the circuit layer 16 is damaged, the substrate 11 can timely determine that the circuit layer 16 has been damaged according to a corresponding electrical signal. The coupling member 17 may be a metal coupling member 17, such as a metal with a good conductivity (e.g., a copper sheet, etc.).

As illustrated in FIG. 9, in some embodiments, the laser projection unit 10 further includes a sealant 18, and the sealant 18 wraps the diffraction element 14 and the cover 15. After the diffractive element 14 is attached to the cover 15, the diffractive element 14 and the cover 15 can be wrapped as a whole through the sealant 18, so that the diffractive element 14 and the cover 15 are isolated from the outside air, to realize dust-proof, waterproof, or other functions of the diffractive element 14 and the cover 15. At the same time, the sealant 18 also has a certain protective ability for the diffractive element 14 and the cover 15, preventing the diffraction element 14 and the cover 15 from being scratched.

As illustrated in FIGS. 10 and FIG. 11, the imaging unit 30 includes a base 31, a lens base 32, a photosensitive element 33, a filter 34, a lens barrel 35 and a lens 36. The lens barrel 35 is coupled to the lens base 32, and the lens 36 is mounted in the lens barrel 35.

The base 31 may be a flexible printed circuit board, a rigid printed circuit board, or a rigid-flex printed circuit board. In this embodiment, the base 31 is a flexible printed circuit board.

The lens base 32 is arranged on the base 31, and the lens base 32 and the base 31 define a first receiving space 37. The photosensitive element 33 is arranged on the base 31 and is located in the first receiving space 37. The filter 34 is arranged on the lens base 32 and is located in the first receiving space 37. The photosensitive element 33 is configured to receive the laser emitted by the laser projection unit 10 to generate a speckle image. The filter 34 is configured to filter light other than light of a specific wavelength, so that only light of the specific wavelength reaches the photosensitive element 33. For example, the filter 34 may filter light other than infrared light with a wavelength of 940 nm, so that only the infrared light with a wavelength of 940 nm reaches the photosensitive element 33.

The lens barrel 35 is arranged on the lens base 32, the lens barrel 35 defines a second receiving space 38, and the second receiving space 38 is communicated with the first receiving space 37.

The lens barrel 35 includes a first sub-lens barrel 351, a second sub-lens barrel 352 and a third sub-lens barrel 353 coupled sequentially. The first sub-lens barrel 351 is coupled to the lens base 32. The sizes of the first sub-lens barrel 351, the second sub-lens barrel 352 and the third sub-lens barrel 353 gradually decrease. Specifically, the first sub-lens barrel 351, the second sub-lens barrel 352 and the third sub-lens barrel 353 are ring-shaped. The sizes of the first sub-lens barrel 351, the second sub-lens barrel 352 and the third sub-lens barrel 353 gradually decrease, which means that outer diameters of the first sub-lens barrel 351, the second sub-lens barrel 352 and the third sub-lens barrel 353 gradually decrease. The third sub-lens barrel 353 and the second sub-lens barrel 352 are arranged in a step shape (that is, an outer diameter of the third sub-lens barrel 353 is less than an outer diameter of the second sub-lens barrel 352, and the third sub-lens barrel 353 is arranged on an upper surface of the second sub-lens barrel 352), and the second sub-lens barrel 352 and the first sub-lens barrel 351 are arranged in a step shape (that is, the outer diameter of the second sub-lens barrel 352 is less than an outer diameter of the first sub-lens barrel 351, and the second sub-lens barrel 352 is arranged on an upper surface of the first sub-lens barrel 351). The second notch 39 is defined between the third sub-lens barrel 353 and the second sub-lens barrel 352. It can be understood that in other embodiments, the first sub-lens barrel 351, the second sub-lens barrel 352 and the third sub-lens barrel 353 can also be other shapes, such as a rectangular ring, an elliptical ring, etc., and are not limited here.

The lens 36 is arranged in the second receiving space 38. One or more lenses 36 can be provided. In this embodiment, a plurality of lenses 36 are provided, sizes of the plurality of lenses 36 are different, and the plurality of lenses 36 are arranged on the first sub-lens barrel 351, the second sub-lens barrel 352 and the third sub-lens barrel 353 correspondingly. The first sub-lens barrel 351, the second sub-lens barrel 352 and the third sub-lens barrel 353 can be configured to fix one or more of the plurality of lenses 36 correspondingly. For example, 5 lenses 36 are provided, of which, one lens 36 is matched with an inner diameter of the first sub-lens barrel 351 and is arranged on the first sub-lens barrel 351; two lenses 36 are matched with an inner diameter of the second sub-lens barrel 352 and are arranged on the second sub-lens barrel 352; and two lenses 36 are matched with an inner diameter of the third sub-lens barrel 353 and are arranged on the third sub-lens barrel 353. In this way, the lenses 36 with different outer diameters can be received and fixed through the corresponding first sub-lens barrel 351, second sub-lens barrel 352 or third sub-lens barrel 353 correspondingly, to save the space occupied by the imaging unit 30.

The lens barrel 35 also defines a light entrance 354, and the light entrance 354 is located in a surface of the third sub-lens barrel 353 opposite the lens base 32. The laser projection unit 10 emits a laser with a wavelength of 940 nm. The laser enters the lens barrel 35 from the light entrance 354 after being reflected by the target object, and then passes through the plurality of lenses 36 sequentially. The filter 34 filters all light entering from the light entrance 354 except the laser with a wavelength of 940 nm, so that the photosensitive element 33 only receives the laser with a wavelength of 940 nm emitted by the laser projection unit 10. Thus the depth image is not disturbed by ambient light and the accuracy of the depth image is improved.

As illustrated in FIG. 12, the fill lamp 40 includes a vertical-cavity surface-emitting laser 41 and a diffuser 42. The vertical-cavity surface-emitting laser 41 is configured to emit a laser passing through the diffuser 42. The diffuser 42 is configured to diffuse the laser so that light is emitted at a larger lighting angle. In this embodiment, since the fill lamp 40 uses the vertical-cavity surface-emitting laser 41 as a light source, the laser emitted by the vertical-cavity surface-emitting laser 41 has a narrow bandwidth compared with an infrared light emitting diode (LED) as a light source. Under the same optical power, the light emitted by the vertical-cavity surface-emitting laser 41 contains more infrared light with a wavelength of 940nm. Therefore, only the vertical-cavity surface-emitting laser 41 with a smaller size than the infrared LED is required to emit the same amount of infrared light with a wavelength of 940nm. However, only a small portion of the light emitted by the infrared LED is the infrared light with a wavelength of 940nm. Therefore, a larger volume is required to achieve a greater optical power, to emit the infrared light with a wavelength of 940 nm in the same amount as the vertical-cavity surface-emitting laser 41 with a smaller size.

As illustrated in FIGS. 2a and 2b again. FIG. 2a is a schematic view of a structure when the display screen 300 and the depth camera 100 are assembled together, and FIG. 2b is a schematic view of a structure when the display screen 300 and the depth camera 100 are not assembled together. The bracket 50 is mounted on the casing 200, and the laser projection unit 10, the imaging unit 30 and the fill lamp 40 are mounted on the bracket 50. The bracket 50 can support and fix the laser projection unit 10, the imaging unit 30 and the fill lamp 40 to a certain extent.

After the laser projection unit 10 and the imaging unit 30 are mounted on the bracket 50, at least part of the first notch 21 and at least part of the second notch 39 are located on the same side of the coupling line C between the laser projection unit 10 and the imaging unit 30. In this embodiment, the first sub-notch 211 and part of the second notch 39 are located on a side of an optical axis plane, and the second sub-notch 212 and part of the second notch 39 are located on the other side of the optical axis plane. The optical axis plane is a plane passing through an optical axis of the laser projection unit 10 and an optical axis of the imaging unit 30.

Referring again to FIGS. 1, 2a and 2b, the display screen 300 is mounted on the casing 200, and the display screen 300 is at least partially located in the first notch 21 and the second notch 39. In this embodiment, the display screen 300 extends into the first notch 21 (specifically the first sub-notch 211 (illustrated in FIG. 7)) and the second notch 39 (illustrated in FIG. 10). An end of the display screen 300 extending into the first notch 21 and the second notch 39 can abut a side face of the first sub-notch 211 and a side face of the second notch 39, so that the display screen 300 is more closely combined with the depth camera 100, and the area of the front panel occupied by the depth camera 100 is minimized to improve the screen-to-body ratio. The first sub-notch 211 of the laser projection unit 10 and the part of the second notch 39 of the imaging unit 30 on the same side as the first sub-notch 211 basically does not occupy the area of the front panel of the electronic device 1000. Compared with a traditional depth camera 100 in which the laser projection unit 10 is not provided with the first notch 21 and the imaging unit 30 is not provided with the second notch 39, an area occupied by the second sub-housing 122 and the third sub-lens barrel 353 is smaller. Thus the screen-to-body ratio can be improved and it is conducive to realizing the full screen.

As illustrated in FIG. 13, the electronic device 1000 further includes a cover plate 400 and an elastic member 500.

The cover plate 400 is mounted on the casing 200 and covers the depth camera 100 and the display screen 300. The cover plate 400 can protect the depth camera 100 and the display screen 300. The cover plate 400 can have an optical opening, and a size of an optical opening can be determined according to a field of view of the laser projection unit 10, the imaging unit 30 and the fill lamp 40. The cover plate 400 itself is transparent, and the optical opening refers to: in an area of the cover plate 400 corresponding to the laser projection unit 10, the imaging unit 30 and the fill lamp 40 is not coated with ink, to form the optical opening that allows emission of light. The optical opening portion is still a solid.

The elastic member 500 is arranged between the diffraction element 14 and the cover plate 400. Specifically, the elastic member 500 is arranged between the cover 15 and the cover plate 400. The elastic member 500 may be a material with a cushioning capacity such as silica gel, rubber. Specifically, the elastic member 500 is arranged between the mounting region 142 of the diffraction element 14 and the cover plate 400. The elastic member 500 can prevent the cover plate 400 from directly contacting the diffraction element 14, and fix the diffraction element 14, thus preventing the diffraction element 14 from falling off.

The display screen 300 of the electronic device 1000 according to embodiments of the present application is at least partially located in the first notch 21 and the second notch 39, so that the second sub-housing 122 and the third sub-lens barrel 353 of the depth camera 100 occupy a smaller area, the screen-to-body ratio can be improved, and it is conducive to realizing the full screen. The diffraction element 14 is not only coupled to the second sub-housing 122 by gluing, etc., but also can be further fixed by a cooperation of the cover plate 400 and the elastic member 500, to prevent the diffraction element 14 from falling off. The fill lamp 40 uses the vertical-cavity surface-emitting laser 41 to fill light, which not only has a smaller volume, but also ensures a better fill light effect.

In some embodiments, the electronic device 1000 further includes a visible light imaging unit 60, and the visible light imaging unit 60 is arranged on the bracket 50. The visible light imaging unit 60 adopts a photosensitive element with a pixel with a dimension of 0.7 micron to collect a visible light image, to further reduce the area of the front panel occupied by the visible light imaging unit 60. The screen-to-body ratio is improved, and it is conducive to realizing the full screen.

Reference throughout this specification to "an embodiment," "some embodiments," "an exemplary embodiment," "an example," "a specific example," or "some examples," means that a particular feature, structure, material, or characteristic described in connection with the embodiment or example is included in at least one embodiment or example of the present disclosure. Thus, the exemplary descriptions of the above terms throughout this specification are not necessarily referring to the same embodiment or example. Moreover the particular features, structures, materials or characteristic described may be combined in a suitable manner in any one or more embodiments or examples.

In addition, terms such as "first" and "second" are merely used for descriptive purposes and cannot be understood as indicating or implying relative importance or the number of technical features indicated. Thus, the features defined with "first" and "second" may explicitly or implicitly include at least one of the features. In the description of the present disclosure, unless otherwise specifically defined, "a plurality of' means at least two, such as two, three, etc.

## Claims

1. A laser projection unit (10), comprising:
a housing (12) comprising a first sub-housing (121) having a top face (123) and a second sub-housing (122) having a side face (124), the second sub-housing (122) being coupled to the top face (123);
a diffraction element (14) mounted on the second sub-housing (122);
a cover (15) attached to the diffraction element (14), and the cover (15) and the first sub-housing (121) being located on two sides of the diffraction element (14) opposite each other; and
a substrate (11), the first sub-housing (121) further comprising a bottom face (125) opposite the top face (123) and a side wall (127) coupling the top face (123) and the bottom face (125), wherein the bottom face (125) is carried on the substrate (11),
wherein the second sub-housing (122) comprises a first side wall (128) and a second side wall (129) arranged opposite each other, the first side wall (128) and the second side wall (129) defines a mounting space (135) therebetween, and the diffraction element (14) is arranged in the mounting space (135) and exposed from the first notch (21),
**characterized in that** the side face (124) and the top face (123) cooperatively forming a stepped face and defining a first notch (21);
the laser projection unit (10) comprises a coupling member (17) and a circuit layer (16), the circuit layer (16) is arranged on a surface of the diffraction element (14) attached to the cover (15), and the coupling member (17) electrically couples the substrate (11) and the circuit layer (16); and
the coupling member (17) is located in the side wall (127) of the first sub-housing (121) and the first side wall (128) or the second side wall (129) of the second sub-housing (122).

2. The laser projection unit (10) according to claim 1, wherein the first notch (21) comprises a first sub-notch (211) and a second sub-notch (212), and the first sub-notch (211) and the second sub-notch (212) are located on two sides of the second sub-housing (122) opposite each other.

3. The laser projection unit (10) according to claim 1, further comprising a sealant (18) wrapping the diffraction element (14) and the cover (15).

4. The laser projection unit (10) according to claim 1, wherein the substrate (11) comprises a flexible printed circuit board, a rigid printed circuit board or a rigid-flex printed circuit board.

5. The laser projection unit (10) according to claim 1 or 4, further comprising a laser emitter (19) arranged on the substrate (11) and configured to emit a laser of a predetermined wave band; preferably
wherein the laser emitter (19) comprises a vertical-cavity surface-emitting laser.

6. The laser projection unit (10) according to any one of claims 1 to 5, wherein a mounting face is formed on a side of the second sub-housing (122) opposite the first notch (21), and a shape of the mounting face cut by a plane perpendicular to the side face (124) is in an arc shape.

7. The laser projection unit (10) according to any one of claims 1 to 5, wherein a height of the second sub-housing (122) extending from the top face (123) is equal to a thickness of a display screen (300).

8. The laser projection module according to any one of claims 1 to 7, further comprising a collimating element (20), the first sub-housing (121) defining a receiving cavity (126), and the collimating element (20) being arranged on the first sub-housing (121) and located in the receiving cavity (126).

9. A depth camera (100), comprising:
a laser projection unit (10) according to any one of claims 1 to 8 and configured to project a laser outwards; and
an imaging unit (30) configured to receive a reflected laser and comprising a lens base (32), a lens barrel (35) and a lens (36), the lens barrel (35) being coupled to the lens base (32), the lens (36) being mounted in the lens barrel (35).

10. The depth camera (100) according to claim 9, wherein the lens barrel (35) comprises a first sub-lens barrel (351), a second sub-lens barrel (352) and a third sub-lens barrel (353) sequentially coupled, the first sub-lens barrel (351) is coupled to the lens base (32), and sizes of the first sub-lens barrel (351), the second sub-lens barrel (352) and the third sub-lens barrel (353) gradually decrease, the third sub-lens barrel (353) and the second sub-lens barrel (352) are arranged in a step shape, the second sub-lens barrel (352) and the first sub-lens barrel (351) are arranged in a step shape, and the third sub-lens barrel (353) and the second sub-lens barrel (352) defines a second notch (39) therebetween; preferably
wherein at least part of the first notch (21) and at least part of the second notch (39) are located on a same side of a coupling line (C) between the laser projection unit (10) and the imaging unit (30).

11. The depth camera (100) according to claim 9 or 10, further comprising a fill lamp (40) comprising a vertical-cavity surface-emitting laser (41) and a diffuser (42), and the vertical-cavity surface-emitting laser (41) being configured to emit a laser passing through the diffuser (42); or
further comprising a bracket (50), and the laser projection unit (10) and the imaging unit (30) being mounted on the bracket (50).

12. An electronic device (1000), comprising:
a casing (200);
a laser projection unit (10) according to any one of claims 1 to 8 and mounted on the casing (200); and
a display screen (300) mounted on the casing (200) and at least partially located in the first notch (21).

13. An electronic device (1000), comprising:
a casing (200);
a depth camera (100) according to any one of claims 9 to 11 and mounted on the casing (200); and
a display screen (300) mounted on the casing (200) and at least partially located in the first notch (21) and the second notch (39).

14. The electronic device (1000) according to claim 13, further comprising:
a cover plate (400) mounted on the casing (200) and covering the depth camera (100); and
an elastic member (500) arranged between the diffraction element (14) and the cover plate (400).

## Patentansprüche

1. Laser-Projektionseinheit (10), die Folgendes umfasst:
ein Gehäuse (12), das ein erstes Untergehäuse (121), das eine Oberseite (123) aufweist, und ein zweites Untergehäuse (122), das eine Seitenfläche (124) aufweist, umfasst, wobei das zweite Untergehäuse (122) an die Oberseite (123) gekoppelt ist;
ein Beugungselement (14), das an dem zweiten Untergehäuse (122) angebracht ist;
eine Abdeckung (15), die an dem Beugungselement (14) befestigt ist, wobei sich die Abdeckung (15) und das erste Untergehäuse (121) auf zwei Seiten des Beugungselements (14) einander gegenüberliegend befinden; und
ein Substrat (11), wobei das erste Untergehäuse (121) ferner eine der Oberseite (123) gegenüberliegende Unterseite (125) und eine Seitenwand (127), die die Oberseite (123) und die Unterseite (125) koppelt, umfasst, wobei die Unterseite (125) auf dem Substrat (11) getragen ist,
wobei das zweite Untergehäuse (122) eine erste Seitenwand (128) und eine zweite Seitenwand (129) umfasst, die einander gegenüberliegend angeordnet sind, wobei die erste Seitenwand (128) und die zweite Seitenwand (129) einen Montageraum (135) dazwischen definieren, wobei das Beugungselement (14) in dem Montageraum (135) angeordnet ist und von der ersten Kerbe (21) freigelegt ist,
**dadurch gekennzeichnet, dass** die Seitenfläche (124) und die Oberseite (123) gemeinsam eine abgestufte Fläche bilden und eine erste Kerbe (21) definieren;
wobei die Laser-Projektionseinheit (10) ein Kopplungselement (17) und eine Schaltungsschicht (16) umfasst, wobei die Schaltungsschicht (16) auf einer Oberfläche des an der Abdeckung (15) befestigten Beugungselements (14) angeordnet ist und das Kopplungselement (17) das Substrat (11) und die Schaltungsschicht (16) elektrisch koppelt; und
sich das Kopplungselement (17) in der Seitenwand (127) des ersten Untergehäuses (121) und der ersten Seitenwand (128) oder der zweiten Seitenwand (129) des zweiten Untergehäuses (122) befindet.

2. Laser-Projektionseinheit (10) nach Anspruch 1, wobei die erste Kerbe (21) eine erste Unterkerbe (211) und eine zweite Unterkerbe (212) umfasst, wobei sich die erste Unterkerbe (211) und die zweite Unterkerbe (212) einander gegenüberliegend auf zwei Seiten des zweiten Untergehäuses (122) befinden.

3. Laser-Projektionseinheit (10) nach Anspruch 1, die ferner ein Dichtungsmittel (18) umfasst, das das Beugungselement (14) und die Abdeckung (15) umwickelt.

4. Laser-Projektionseinheit (10) nach Anspruch 1, wobei das Substrat (11) eine flexible Leiterplatte, eine starre Leiterplatte und eine starr-flexible Leiterplatte umfasst.

5. Laser-Projektionseinheit (10) nach Anspruch 1 oder 4, die ferner einen Laser-Emitter (19) umfasst, der auf dem Substrat (11) angeordnet ist und konfiguriert ist, einen Laser mit einem vorgegebenen Wellenband zu emittieren;
wobei vorzugsweise der Laser-Emitter (19) einen oberflächenemittierenden Laser mit vertikalem Resonator umfasst.

6. Laser-Projektionseinheit (10) nach einem der Ansprüche 1 bis 5, wobei eine Montagefläche auf einer Seite des zweiten Untergehäuses (122), die der ersten Kerbe (21) gegenüberliegt, ausgebildet ist und sich eine Form der durch eine Ebene senkrecht zur Seitenfläche (124) geschnittenen Montagefläche in einer Bogenform befindet.

7. Laser-Projektionseinheit (10) nach einem der Ansprüche 1 bis 5, wobei eine Höhe des zweiten Untergehäuses (122), die sie von der Oberseite (123) erstreckt, gleich einer Dicke eines Anzeigeschirms (300) ist.

8. Laser-Projektionsmodul nach einem der Ansprüche 1 bis 7, die ferner ein Kollimatorelement (20) umfasst, wobei das erste Untergehäuse (121) einen Empfangsresonator (126) definiert und das Kollimatorelement (20) in dem ersten Untergehäuse (121) angeordnet ist und sich in dem Empfangsresonator (126) befindet.

9. Tiefenkamera (100), die Folgendes umfasst:
eine Laser-Projektionseinheit (10) nach einem der Ansprüche 1 bis 8, die konfiguriert ist, einen Laser nach außen zu projizieren; und
eine Bildgebungseinheit (30), die konfiguriert ist, einen reflektierten Laser zu empfangen, und die eine Objektivbasis (32), einen Objektivtubus (35) und ein Objektiv (36) umfasst, wobei der Objektivtubus (35) an die Objektivbasis (32) gekoppelt ist und das Objektiv (36) in dem Objektivtubus (35) angebracht ist.

10. Tiefenkamera (100) nach Anspruch 9, wobei der Objektivtubus (35) einen ersten Unter-Objektivtubus (351), einen zweiten Unter-Objektivtubus (352) und einen dritten Unter-Objektivtubus (353) umfasst, die der Reihe nach gekoppelt sind, wobei der erste Unter-Objektivtubus (351) an die Objektivbasis (32) gekoppelt ist und die Größen des ersten Unter-Objektivtubus (351), des zweiten Unter-Objektivtubus (352) und des dritten Unter-Objektivtubus (353) allmählich abnehmen, der dritte Unter-Objektivtubus (353) und der zweite Unter-Objektivtubus (352) in einer Stufenform angeordnet sind, der zweite Unter-Objektivtubus (352) und der erste Unter-Objektivtubus (351) in einer Stufenform angeordnet sind und der dritte Unter-Objektivtubus (353) und der zweite Unter-Objektivtubus (352) eine zweite Kerbe (39) dazwischen definieren;
wobei sich vorzugsweise wenigstens ein Teil der ersten Kerbe (21) und wenigstens ein Teil der zweiten Kerbe (39) auf derselben Seite einer Kopplungslinie (C) zwischen der Laser-Projektionseinheit(10) und der Bildgebungseinheit (30) befinden.

11. Tiefenkamera (100) nach Anspruch 9 oder 10, die ferner eine Fülllampe (40) umfasst, die einen oberflächenemittierenden Laser (41) mit vertikalem Resonator und einen Diffusor (42) umfasst, wobei der oberflächenemittierende Laser (41) mit vertikalem Resonator konfiguriert ist, einen Laser zu emittieren, der durch den Diffusor (42) hindurchgeht; oder
die ferner eine Klammer (50) umfasst, wobei die Laser-Projektionseinheit (10) und die Bildgebungseinheit (30) an der Klammer (50) angebracht sind.

12. Elektronische Vorrichtung (1000), die Folgendes umfasst:
ein Gehäuse (200);
eine Laser-Projektionseinheit (10) nach einem der Ansprüche 1 bis 8, die in dem Gehäuse (200) angebracht ist; und
einen Anzeigeschirm (300), der an dem Gehäuse (200) angebracht ist und sich wenigstens teilweise in der ersten Kerbe (21) befindet.

13. Elektronische Vorrichtung (1000), die Folgendes umfasst:
ein Gehäuse (200);
eine Tiefenkamera (100) nach einem der Ansprüche 9 bis 11, die in dem Gehäuse (200) angebracht ist; und
einen Anzeigeschirm (300), der an dem Gehäuse (200) angebracht ist und sich wenigstens teilweise in der ersten Kerbe (21) und der zweiten Kerbe (39) befindet.

14. Elektronische Vorrichtung (1000) nach Anspruch 13, die ferner Folgendes umfasst:
eine Abdeckplatte (400), die an dem Gehäuse (200) angebracht ist und die Tiefenkamera (100) abdeckt; und
ein elastisches Element (500), das zwischen dem Beugungselement (14) und der Abdeckplatte (400) angeordnet ist.

## Revendications

1. Unité de projection laser (10), comprenant :
un logement (12) comprenant un premier sous-logement (121) ayant une face supérieure (123) et un second sous-logement (122) ayant une face latérale (124), le second sous-logement (122) étant accouplé à la face supérieure (123) ;
un élément de diffraction (14) monté sur le second sous-logement (122) ;
un couvercle (15) fixé à l'élément de diffraction (14), et le couvercle (15) et le premier sous-logement (121) étant situés sur deux côtés de l'élément de diffraction (14) opposés l'un à l'autre ; et
un substrat (11), le premier sous-logement (121) comprenant en outre une face inférieure (125) opposée à la face supérieure (123) et une paroi latérale (127) accouplant la face supérieure (123) et la face inférieure (125), dans laquelle la face inférieure (125) est supportée sur le substrat (11),
dans laquelle le second sous-logement (122) comprend une première paroi latérale (128) et une seconde paroi latérale (129) agencées opposées l'une à l'autre, la première paroi latérale (128) et la seconde paroi latérale (129) définissent un espace de montage (135) entre celles-ci, et l'élément de diffraction (14) est agencé dans l'espace de montage (135) et exposé à partir de la première entaille (21),
**caractérisée en ce que** la face latérale (124) et la face supérieure (123) en coopération forment une face épaulée et définissant une première entaille (21) ;
l'unité de projection laser (10) comprend un organe d'accouplement (17) et une couche de circuit (16), la couche de circuit (16) est agencée sur une surface de l'élément de diffraction (14) fixé au couvercle (15), et l'organe d'accouplement (17) accouple électriquement le substrat (11) et la couche de circuit (16) ; et
l'organe d'accouplement (17) est situé dans la paroi latérale (127) du premier sous-logement (121) et la première paroi latérale (128) ou la seconde paroi latérale (129) du second sous-logement (122).

2. Unité de projection laser (10) selon la revendication 1, dans laquelle la première entaille (21) comprend une première sous-entaille (211) et une seconde sous-entaille (212), et la première sous-entaille (211) et la seconde sous-entaille (212) sont situées sur deux côtés du second sous-logement (122) opposés l'un à l'autre.

3. Unité de projection laser (10) selon la revendication 1, comprenant en outre un produit d'étanchéité (18) enveloppant l'élément de diffraction (14) et le couvercle (15).

4. Unité de projection laser (10) selon la revendication 1, dans laquelle le substrat (11) comprend une carte de circuit imprimé flexible, une carte de circuit imprimé rigide ou une carte de circuit imprimé flexorigide.

5. Unité de projection laser (10) selon la revendication 1 ou 4, comprenant en outre un émetteur laser (19) agencé sur le substrat (11) et configuré pour émettre un laser d'une bande d'ondes prédéterminé ; de préférence
dans laquelle l'émetteur laser (19) comprend un laser à cavité verticale émettant par la surface.

6. Unité de projection laser (10) selon l'une quelconque des revendications 1 à 5, dans laquelle une face de montage est formée sur un côté du second sous-logement (122) opposé à la première entaille (21), et une forme de la face de montage coupée par un plan perpendiculaire à la face latérale (124) est en forme d'arc.

7. Unité de projection laser (10) selon l'une quelconque des revendications 1 à 5, dans laquelle une hauteur du second sous-logement (122) s'étendant depuis la face supérieure (123) est égal à une épaisseur d'un écran d'affichage (300).

8. Module de projection laser selon l'une quelconque des revendications 1 à 7, comprenant en outre un élément collimateur (20), le premier sous-logement (121) définissant une cavité de réception (126), et l'élément collimateur (20) étant agencé sur le premier sous-logement (121) et situé dans la cavité de réception (126).

9. Caméra de profondeur (100), comprenant :
une unité de projection laser (10) selon l'une quelconque des revendications 1 à 8 et configurée pour projeter un laser vers l'extérieur ; et
une unité d'imagerie (30) configurée pour recevoir un laser réfléchi et comprenant une base de lentille (32), un barillet de lentille (35) et une lentille (36), le barillet de lentille (35) étant accouplé à la base de lentille (32), la lentille (36) étant montée dans le barillet de lentille (35).

10. Caméra de profondeur (100) selon la revendication 9, dans laquelle le barillet de lentille (35) comprend un premier sous-barillet de lentille (351), un deuxième sous-barillet de lentille (352) et un troisième sous-barillet de lentille (353) séquentiellement accouplés, le premier sous-barillet de lentille (351) est accouplé à la base de lentille (32), et des tailles du premier sous-barillet de lentille (351), du deuxième sous-barillet de lentille (352) et du troisième sous-barillet de lentille (353) diminuent progressivement, le troisième sous-barillet de lentille (353) et le deuxième sous-barillet de lentille (352) sont agencés en forme d'épaulement, le deuxième sous-barillet de lentille (352) et le premier sous-barillet de lentille (351) sont agencés en forme d'épaulement, et le troisième sous-barillet de lentille (353) et le deuxième sous-barillet de lentille (352) définissent une seconde entaille (39) entre ceux-ci ; de préférence
dans laquelle au moins une partie de la première entaille (21) et au moins une partie de la seconde entaille (39) sont situées sur un même côté d'une ligne d'accouplement (C) entre l'unité de projection laser (10) et l'unité d'imagerie (30).

11. Caméra de profondeur (100) selon la revendication 9 ou 10, comprenant en outre une lampe d'appoint (40) comprenant un laser à cavité verticale émettant par la surface (41) et un diffuseur (42), et le laser à cavité verticale émettant par la surface (41) étant configuré pour émettre un laser passant à travers le diffuseur (42) ; ou
comprenant en outre un support (50), et l'unité de projection laser (10) et l'unité d'imagerie (30) étant montées sur le support (50).

12. Dispositif électronique (1000), comprenant :
un boîtier (200) ;
une unité de projection laser (10) selon l'une quelconque des revendications 1 à 8 et montée sur le boîtier (200) ; et
un écran d'affichage (300) monté sur le boîtier (200) et au moins partiellement situé dans la première entaille (21) .

13. Dispositif électronique (1000), comprenant :
un boîtier (200) ;
une caméra de profondeur (100) selon l'une quelconque des revendications 9 à 11 et montée sur le boîtier (200) ; et
un écran d'affichage (300) monté sur le boîtier (200) et au moins partiellement situé dans la première entaille (21) et la seconde entaille (39).

14. Dispositif électronique (1000) selon la revendication 13, comprenant en outre :
une plaque couvercle (400) montée sur le boîtier (200) et couvrant la caméra de profondeur (100) ; et
un organe élastique (500) agencé entre l'élément de diffraction (14) et la plaque couvercle (400).
